(19) Europäisches Patentamt
European Patent Office
Office européen des brevets

(11) **EP 1 800 206 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(21) Anmeldenummer: **05777849.0**

(22) Anmeldetag: **03.08.2005**

(51) Int Cl.:
*G06F 5/06* (2006.01)    *B60R 21/01* (2006.01)

(86) Internationale Anmeldenummer:
**PCT/EP2005/053788**

(87) Internationale Veröffentlichungsnummer:
**WO 2006/037677 (13.04.2006 Gazette 2006/15)**

(54) **VERFAHREN ZUM AUSLESEN VON SENSORDATEN**

METHOD FOR READING OUT SENSOR DATA

PROCEDE D'EXTRACTION DE DONNEES DE CAPTEURS

(84) Benannte Vertragsstaaten:
**DE ES FR GB**

(30) Priorität: **01.10.2004 DE 20044778 U**

(43) Veröffentlichungstag der Anmeldung:
**27.06.2007 Patentblatt 2007/26**

(60) Teilanmeldung:
**15175392.8**

(73) Patentinhaber: **ROBERT BOSCH GMBH**
**70442 Stuttgart (DE)**

(72) Erfinder:
 • **OHL, Christian**
   **72793 Pfullingen (DE)**
 • **FINK, Andreas**
   **72800 Eningen (DE)**
 • **MOLDENHAUER, Maike**
   **71111 Waldenbuch (DE)**

(56) Entgegenhaltungen:
DE-A1- 10 100 156     US-A- 4 285 038
US-A1- 2004 088 094     US-B1- 6 274 948

 • **GEMAC: "MVS7 Dokumentation" REVISION 1.2, [Online] 25. Januar 2002 (2002-01-25), Seiten 1-22, XP002349051 ISSN: 5 Gefunden im Internet: URL:http://www.gemac-chemnitz.de/pages/download/data/40000-HB-1-2-D-MVS7.pdf> [gefunden am 2005-10-12]**
 • **IDT: "IDT SyncFIFO" IDT DATA SHEET, [Online] September 2002 (2002-09), Seiten 1-11, XP002349052 [gefunden am 2005-10-12]**

## Beschreibung

Stand der Technik

Die Erfindung geht aus von einem Verfahren zum Auslesen von Sensordaten nach der Gattung des unabhängigen Patentanspruchs.

In Insassenschutzsystemen, beispielsweise Airbagsystemen, werden Sensoren in einem zentralen Steuergerät und ausgelagerte periphere Sensoren eingesetzt. Die peripheren Sensoren leiten ihren Arbeitstakt aus einer Oszillatorschaltung ab, die eine gewisse Toleranz aufweist. Dadurch weist auch die Abtastrate der Sensordaten Toleranzen auf. Die Toleranzen werden beispielsweise durch Streuungen unterschiedlicher Bauteile und durch Temperatureffekte verursacht, sind aber bei einzelnen Sensoren kurzfristig sehr stabil. Im Steuergerät werden die Sensordaten in der Regel in einem Empfänger-ASIC zwischengespeichert und mit einem festen Zeitraster (z.B. 250μs) beispielsweise von einer als Mikroprozessor ausgeführten Auswerte- und Steuereinheit ausgelesen.

Hierbei können zwei grundsätzliche Fälle unterschieden werden. In einem ersten Fall ist die Übertragungsrate der Sensordaten so gewählt, dass der Sensor immer schneller Sensordaten an den Empfänger-ASIC liefert, als neue Sensordaten vom Mikroprozessor im Steuergerät aus dem Empfänger-ASIC ausgelesen werden. So beträgt die Übertragungsrate Tpas der Sensordaten vom Sensor zum Empfänger-ASIC beispielsweise 228μs (Tpas=228μs) während die Ausleserate Tsg des Mikroprozessors im Steuergerät beispielsweise 250μs (Tsg=250μs) beträgt, d.h. Tpas<Tsg. Dadurch ist sichergestellt, dass immer "neue" Sensordaten vom Steuergerät eingelesen werden. Andererseits können Sensordaten verloren gehen, wenn neue Sensordaten vom Sensor in den Empfänger-ASIC übertragen werden, bevor das Steuergerät die "alten" Sensordaten aus dem Empfänger-ASIC ausgelesen hat, d.h. die neuen Sensordaten "überschreiben" die noch nicht ausgelesenen Sensordaten im Empfänger-ASIC.

In einem zweiten Fall ist die Übertragungsrate Tpas der Sensordaten ist so gewählt, dass der Sensor immer langsamer Sensordaten liefert, als die Sensordaten im Steuergerät eingelesen werden Die Übertragungsrate Tpas beträgt beispielsweise 512μs (Tpas=512μs) und die Ausleserate Tsg beträgt beispielsweise 500μs (Tsg=500μs), d.h. Tpas>Tsg. Dadurch ist sichergestellt, dass ein "Jitter-Effekt", d.h. eine Ungenauigkeit des Auslesezeitpunkts des Verfahrens unmittelbar vor oder nach dem Vorliegen eines neuen Datenwertes im Empfänger-ASIC, nur bei maximal einem Sendetaktzyklus vorliegt, im Gegensatz zu einer kontinuierlichen Jittersituation, wenn die Zeitbasis Tsg im Steuergerät für das Auslesen und die Zeitbasis Tpas im Sensor beim Senden identisch, aber asynchron wäre. Beim zweiten Fall kann es allerdings zu einer Verdopplung von Sensordaten kommen, wenn noch keine neuen Sensordaten übertragen wurden, bevor das Steuergerät wieder "neue" Sensordaten aus dem Empfänger-ASIC ausliest.

Dadurch gehen bei den herkömmlichen Verfahren entweder Informationen aus den Sensordaten verloren oder die Informationen werden verdoppelt. Bei einem herkömmlichen Verfahren zum Auslösen von Insassenschutzmitteln können dadurch Einbussen bei der Leistungsfähigkeit auftreten. Dies trifft besonders dann zu, wenn die verlorenen bzw. verdoppelten Sensordaten Extremwerte im Signalverlauf repräsentieren, z.B. positive oder negative Spitzen bei höherfrequenten Signalanteilen.

GEMAC: "MVS7 Dokumentation" Revision 1.2, (online) 25. Januar 2002 (2002-01-25), Seiten 1 - 22 offenbart ein Messwertverarbeitungssystem zur schnellen Erfassung und Interpolation von Signalen. Dabei wird insbesondere eine sogenannter "Fospeicher" für die Messwerte verwendet. Aus DE 101 00 156 A1 ist eine Vorrichtung zur Messwerterfassung bekannt. Dabei werden Sensorwerte zwischengespeichert. Bei einem Überlauf kann eine numerische Steuerung geeignete Gegenmaßnahmen einleiten.

Vorteile der Erfindung

Das erfindungsgemäße Verfahren zum Auslesen von Sensordaten mit den Merkmalen des unabhängigen Patentanspruchs hat demgegenüber den Vorteile es ist bekannt, dass Sensordaten, die asynchron von mindestens einem Sensor zu einem Zwischenspeicher in einem Steuergerät übertragen werden derart aus dem Zwischenspeicher ausgelesen werden, dass eine vorhandene Äquidistanz der Sensorsignale erhalten bleibt und keine Signalinformationen der Sensordaten verloren gehen bzw. verdoppelt werden. Diese Fehler treten insbesondere dann auf, wenn einzelne Sensordatenwerte mit besonders hoher oder niedriger Amplitude im Vergleich zu vorhergehenden oder nachfolgenden Datenwerten verloren gehen bzw. doppelt ausgelesen werden. Da das erfindungsgemäße Ausleseverfahren Fehler bzw. Abweichungen aufgrund fehlender bzw. doppelter Sensordaten nahezu ausschließt, kann die Leistungsfähigkeit des Auslöseverfahrens der Insassenschutzmittel in vorteilhafter Weise verbessert werden. Die Abtastrate zum Auslesen der Sensordaten aus dem Zwischenspeicher wird in vorteilhafter Weise so gewählt, dass ein Überlaufen des Zwischenspeichers vermieden wird und alle zwischengespeicherten Sensordaten mit der vorgegebenen Abtastrate in einen Steuergerätespcicher eingelesen werden. Sind zum Abtastzeitpunkt noch keine neuen Sensordaten im Zwischenspeicher vorhanden, dann erzeugt der Zwischenspeicher eine Meldung, welche dem Steuergerät anzeigt, dass noch keine neuen

Sensordaten vorhanden sind und das Steuergerät wartet mit dem Auslesen der Sensordaten bis zum nächsten Abtastpuls.

Durch die in den abhängigen Ansprüchen aufgeführten Maßnahmen und Weiterbildungen sind vorteilhafte Verbesserungen des im unabhängigen Patentanspruch angegebenen Verfahrens zum Auslesen von Sensordaten möglich.

Besonders vorteilhaft ist, dass durch das erfindungsgemäße Verfahren zusätzlich Informationen über eine Übertragungsdatenrate und eine Phasenlage der ausgelesenen Sensordaten des mindestens einen asynchron arbeitenden Sensors gewonnen werden können. So kann beispielsweise aus der Anzahl der in einem vorgegebenen Zeitraum ausgelesenen Sensordaten, der vorgegebenen Abtastrate und der Anzahl der in diesem Zeitraum empfangenen Meldungen die Datenrate des Sensors berechnet werden.

Aus der berechneten Datenrate, der vorgegebenen Abtastrate und dem Schema der Meldungen können dann in vorteilhafter Weise Informationen über die Phasenlage der Sensorsignale des mindestens einen Sensors ermittelt werden.

Weiter ist es von Vorteil, dass die Daten des mindestens einen Sensors in Kenntnis der Abtastrate und der ermittelten Phasenlage der Sensorsignale, auf die Zeitbasis des Steuergerätes synchronisiert abgelegt und/oder bearbeitet werden können. So kann aus dem Taktschema der eingehenden Sensordaten die Arbeitsfrequenz und damit die Abtast- und Übertragungsrate sowie die Phasenlage der Sensordaten des mindestens einen asynchronen Sensors ermittelt werden. Damit ist eine Synchronisierung der Signale der asynchronen Sensoren auf das interne Taktschema im Steuergerät möglich Die zeitliche Äquidistanz der Sensorsignale bleibt erhalten. Dadurch wird die Qualität der Sensorsignale verbessert und damit auch die Leistungsfähigkeit des Auswerteverfahrens als Teil des Auslöseverfahrens für die Insassenschutzmittel. Die Abbildung der Sensorsignale auf die Zeitbasis im Steuergerät kann per Software erfolgen. Dadurch können Zusatzkosten aufgrund zusätzlich erforderlicher Steuermechanismen, wie z.B. Spannungsimpulse, im Steuergerät und im Sensor oder höherer Genauigkeitsanforderungen, beispielsweise durch Einsatz eines Quarzoszillators anstelle eines einfachen RC-Oszillators, eingespart werden.

Der mindestens eine Sensor kann beispielsweise als Teil einer Upfrontsensorik und/oder einer Umfeldsensorik und/oder einer Seitenaufprallsensorik und/oder einer Kontaktsensorik für den Fußgängerschutz ausgeführt werden.

Zeichnung

Ausführungsbeispiele der Erfindung sind in der Zeichnung dargestellt und werden in der nachfolgenden Beschreibung näher erläutert.

Es zeigen

Figur 1 ein Blockschaltbild einer Vorrichtung zur Durchführung des erfindungsgemäßen Verfahrens

Figur 2a und 2b jeweils ein Zeitablaufdiagramm zur Darstellung der Signale bei einem herkömmlichen Ausleseverfahren, und

Figur 3 ein Zeitablaufdiagramm zur Darstellung der Signale bei einem erfindungsgemäßen Ausleseverfahren.

Beschreibung

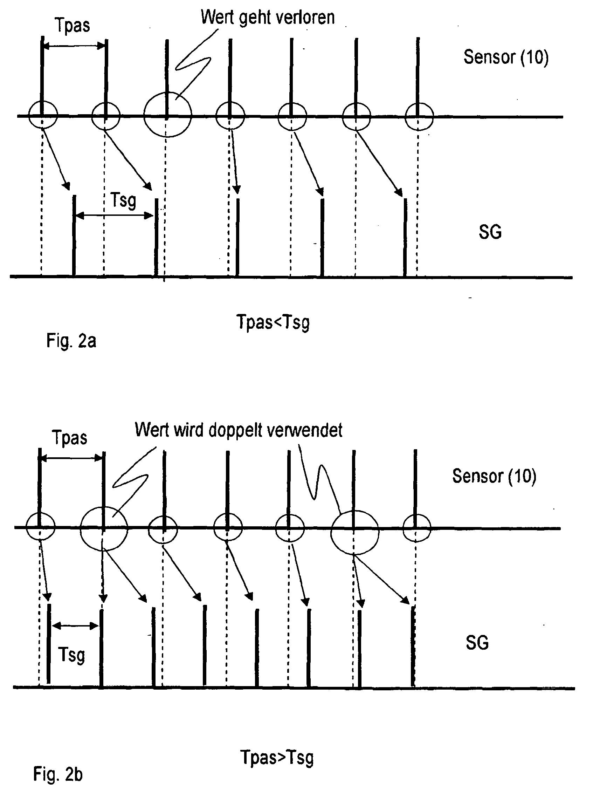

Nach dem aktuellen Stand der Technik werden ausgelagerte periphere Sensoren über eine Zuleitung an ein Steuergerät SG angeschlossen. Wie aus Fig. 2a und 2b ersichtlich ist, sendet bei einem herkömmlichen Ausleseverfahren der ausgelagerte Sensor 10 Daten mit festen Zeitabständen Tpas von z.B. 228us. Die Zeitabstände können dabei beispielsweise um +/-5% variieren. Die Daten werden in einem Empfänger-ASIC zwischengespeichert, wobei einer oder mehrere Sensordatenwerte zwischengespeichert werden können. Das Steuergerät SG umfasst einen Mikroprozessor, welcher die Daten zyklisch aus dem Empfänger-ASIC ausliest. Durch das Auslesen der Sensordaten wird der Empfangsspeicher im Empfänger-ASIC geleert.

In Fig. 2a ist der Fall dargestellt, bei dem eine Ausleserate Tsg etwas langsamer als die Senderate Tpas der ausgelagerten Sensoren ist, z.B. Tsg= 250μs, d.h. Tpas<Tsg. Dadurch werden immer "frische" Werte ausgelesen. Falls der Empfangsspeicher bereits voll ist und ein neuer Datenwert eintrifft, wird der jeweils älteste Wert verworfen. Dadurch können einzelne Sensordatenwerte der Sensoren verloren gehen.

In Fig. 2b ist der Fall dargestellt, bei dem die Ausleserate Tsg etwas schneller als die Senderate Tpas der Sensoren ist, z.B. Tsg=210μs, d.h. Tpas>Tsg. Hat der Empfangsspeicher beim nächsten Auslesen durch das Steuergerät SG noch keinen neuen Datenwert vom Sensor empfangen, dann wird der bereits zuvor ausgelesene "alte" Datenwert nochmals ausgelesen, wodurch einzelne Datenwerte der Sensoren verdoppelt werden.

Erfindungsgemäß wird daher die Abtastrate Tsg so gewählt, dass ein Überlaufen des Zwischenspeichers vermieden wird und alle zwischengespeicherten Sensordaten mit der vorgegebenen Abtastrate Tsg in einen Steuergerätespeicher eingelesen werden, wobei der Zwischenspeicher eine Meldung (RBE) erzeugt, wenn zum Abfragezeitpunkt keine neue Sensordaten im Zwischenspeicher vorhanden sind.

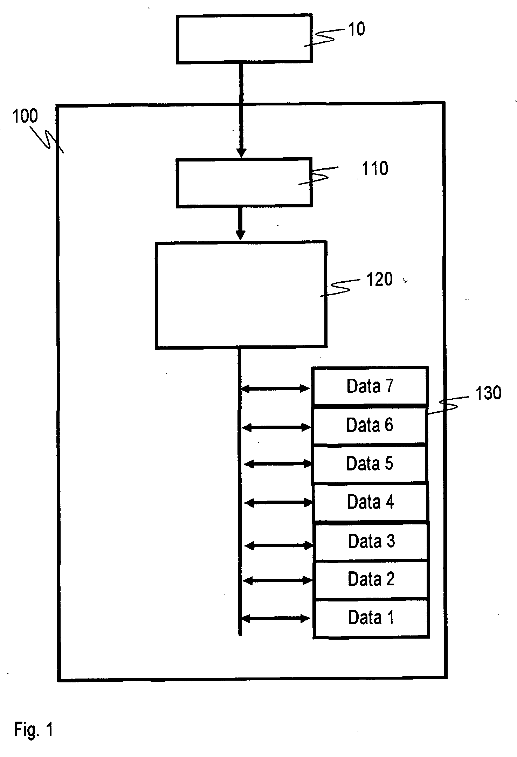

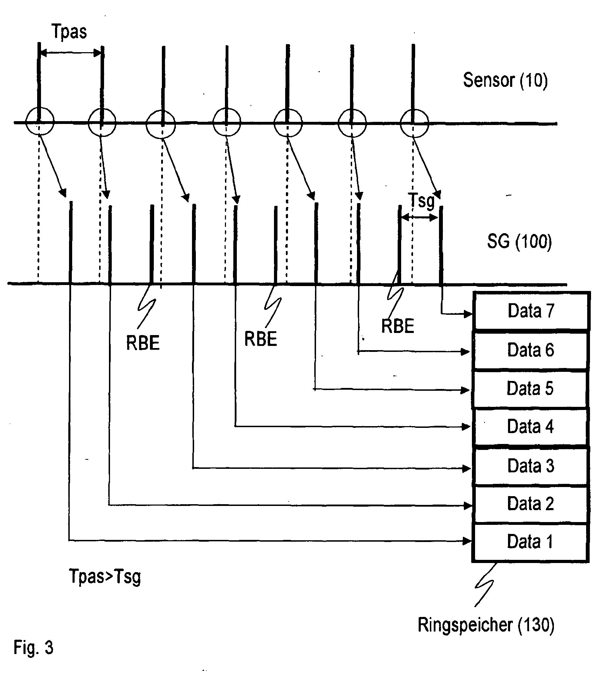

Figur 1 zeigt ein Blockschaltbild einer Vorrichtung zur Durchführung des erfindungsgemäßen Verfahrens zum Auslesen von Sensordaten aus einem Zwischenspeicher und Figur 3 zeigt ein Zeitablaufdiagramm zur Darstellung der Signale bei einem erfindungsgemäßen Ausleseverfahren. Nachfolgend wird das erfindungsgemäße Verfahren unter Bezugnahme auf die Fig. 1 und 3 beschrieben.

Wie aus Fig. 1 ersichtlich ist, umfasst die Vorrichtung eine ausgelagerte Sensorik 10, die mindestens einen Sensor umfasst und über eine Zuleitung an ein Steuergerät 100 angeschlossen. Die Sensorik 10 sendet bei einem Daten mit festen Zeitabständen Tpas von z.B. 228us. Die Zeitabstände können dabei beispielsweise um +/-5% variieren. Die Daten werden in einem Zwischenspeicher 110 zwischengespeichert, der beispielsweise als Empfänger-ASIC ausgeführt ist und in welchem einer oder mehrere Sensordatenwerte zwischengespeichert werden können. Das Steuergerät 100 umfasst eine Auswerte- und Steuereinheit 120, die beispielsweise als Mikroprozessor ausgeführt ist, welcher die Daten zyklisch mit einer Abtastrate Tsg von z.B. 200$\mu$s aus dem Zwischenspeicher 110 ausliest. Durch das Auslesen der Sensordaten wird der Zwischenspeicher 110 geleert. Der Auslesezyklus Tsp=200$\mu$s ist bei der Übertragungsrate Tpas von 228$\mu$s so gewählt, dass ein Überlaufen des Zwischenspeichers 110 vermieden wird und alle Datenwerte von der Auswerte- und Steuereinheit 120 in den Steuergerätespeicher 130 eingelesen werden können. Ist zu einem Abtastzeitpunkt kein neuer Datenwert vorhanden, dann, erzeugt der Zwischenspeicher 110 eine Meldung RBE (Receive Buffer Empty) und sendet dies Meldung an die Auswerte- und Steuereinheit 120 zurück. Die Auswerte- und Steuereinheit 120 wartet dann mit dem Auslesen der neuen Sensordaten bis zum nächsten Abtastimpuls. Fig. 3 zeigt beispielhaft, dass der Zwischenspeicher 110 im Steuergerät 100 die Meldung RBE jeweils beim dritten, sechsten und neunten dargestellten Abtastimpuls erzeugt. Dadurch wird sichergestellt, dass keine doppelten Datenwerte aus dem Zwischenspeicher 110 ausgelesen werden. Die Datenwerte werden von der Auswerte- und Steuereinheit 120 im Steuergerätespeicher 130 abgelegt, der beispielsweise als Ringspeicher ausgeführt ist, von dem beispielhaft sieben Speicherplätze Data 1 bis Data 7 dargestellt sind, wobei der erste Datenwert von der Sensorik beim ersten Abtastimpuls im ersten Speicherplatz Data 1 abgelegt wird, der zweite Datenwert beim zweiten Abtastimpuls im zweiten Speicherplatz Data 2 abgelegt wird, der dritte Datenwert beim vierten Abtastimpuls im dritten Speicherplatz Data 3 abgelegt wird, usw. Alle zeitlich äquidistanten Werte der Sensorik 10 sind so für eine Weiterverarbeitung, beispielsweise für eine weitere Auswertung durch ein Verfahren zur Auslösung der Insassenschutzmittel, verfügbar und können in die Auslöseentscheidung für die Insassenschutzmittel wie Airbag, Gurtstraffer usw. einbezogen werden.

Die Arbeitsfrequenz fpas=1/Tpas der Sensorik 10 kann bei bekannter Abtastfrequenz fsg=1/Tsg des Steuergerätes ermittelt werden. Mit dem Wert n, welcher dem Verhältnis der Anzahl aller ausgelesen Datenwert zur Anzahl der in diesem Zeitraum erzeugten Meldungen RBE entspricht ergibt sich durch Umformen der Gleichung (1) die Gleichung (2):

$$n = Tpas/(Tpas-Tsg) \quad (1)$$

$$Tpas = -(n*Tsg)/(1-n) \quad (2)$$

So ergibt sich beispielsweise bei einer Abtastrate von 200$\mu$s und bei 500 ausgelesenen Wert, von denen 62 Meldungen RBE erzeugt wurden für n=500/62 ein Wert von 8,06 und damit eine Datenrate Tpas=-(8,06*200us)/(1-8,06)=228us.

Die Phasenlage kann iterativ aus dem Schema der Meldungen RBE (Receive Buffer Empty) bei den Lesevorgängen ermittelt werden. Beträgt z.B. die Datenrate des Sensors 228 $\mu$s und die Abtastrate bzw. die Ausleserate des Steuergerätes 100 200$\mu$s, so kann in einem Zyklus, in dem kein neuer Sensordatenwert vorliegt, das Alter des zuletzt eingelesenen Sensordatenwerts auf max. 228$\mu$s-200$\mu$s=28$\mu$s bestimmt werden. Durch die Bewertung der relativen Lage weiterer Meldungen RBE kann die Toleranz weiter eingeschränkt werden. Mit Kenntnis der Abtastfrequenz und der Phasenlage der Sensordatensignale können diese auf die Zeitbasis im Steuergerät synchronisiert abgelegt und bearbeitet werden.

Die ausgelagerte periphere Sensorik 10 ist beispielsweise als Teil einer Upfrontsensorik und/oder einer Umfeldsensorik und/oder einer Seitenaufprallsensorik und/oder einer Kontaktsensorik für den Fußgängerschutz ausgeführt.

## Patentansprüche

1. Verfahren zum Auslesen von Sensordaten aus einem Zwischenspeicher (110), welche mit einer Datenrate ($T_{pas}$) von mindestens einem Sensor (10) in den Zwischenspeicher (110) geschrieben werden, wobei eine Abtastrate ($T_{sg}$) so gewählt wird, dass ein Überlaufen des Zwischenspeichers (110) vermieden wird und alle zwischengespeicherten Sensordaten mit der vorgegebenen Abtastrate ($T_{sg}$) in einen Steuergerätespeicher (130) eingelesen werden, **dadurch gekennzeichnet, dass** der Zwischenspeicher (110) eine Meldung (RBE) erzeugt, wenn zum Abtastzeitpunkt keine neuen Sensordaten im Zwischenspeicher (110) vorhanden sind, wobei aus der Anzahl der in einem vorgegebenen Zeitraum ausgelesenen Sensordaten, der vorgegebenen Abtastrate ($T_{sg}$) und der Anzahl der in diesem Zeitraum empfangenen Meldungen (RBE) die Datenrate ($T_{pas}$) des Sensors (10) berechnet wird.

2. Verfahren nach Anspruch 1, **dadurch gekennzeichnet, dass** der mindestens eine Sensor (10) als Teil einer Upfrontsensorik und/oder einer Umfeldsensorik und/oder einer Seitenaufprallsensorik und/oder einer Kontaktsensorik für den Fußgängerschutz ausgeführt wird.

**3.** Verfahren nach einem der Ansprüche 1 bis 2, **dadurch gekennzeichnet, dass** der Zwischenspeicher (110) als Empfänger-ASIC ausgeführt wird.

**4.** Verfahren nach einem der Ansprüche 1 bis 3, **dadurch gekennzeichnet, dass** der mindestens eine Sensor (10) seine Datenrate aus einer Oszillatorschaltung ableitet.

**5.** Verfahren nach einem der Ansprüche 1 bis 4, **dadurch gekennzeichnet, dass** der Steuergerätespeicher (130) als Ringspeicher ausgeführt ist.

## Claims

**1.** Method for reading sensor data from a buffer store (110) that are written to the buffer store (110) by at least one sensor (10) at a data rate ($T_{pas}$), wherein a sampling rate ($T_{sg}$) is chosen such that overflow of the buffer store (110) is avoided and all bufferstored sensor data are read into a controller memory (130) at the prescribed sampling rate ($T_{sg}$), **characterized in that** the buffer store (110) produces a report (RBE) if no new sensor data are present in the buffer store (110) at the sampling time, wherein the data rate ($T_{pas}$) of the sensor (10) is computed from the number of sensor data that are read in a prescribed period, the prescribed sampling rate ($T_{sg}$) and the number of reports (RBE) received in this period.

**2.** Method according to Claim 1, **characterized in that** the at least one sensor (10) is embodied as part of an upfront sensor system and/or an ambient sensor system and/or a side impact sensor system and/or a contact sensor system for pedestrian protection.

**3.** Method according to either of Claims 1 and 2, **characterized in that** the buffer store (110) is embodied as a receiver ASIC.

**4.** Method according to one of Claims 1 to 3, **characterized in that** the at least one sensor (10) derives its data rate from an oscillator circuit.

**5.** Method according to one of Claims 1 to 4, **characterized in that** the controller memory (130) is embodied as a ring memory.

## Revendications

**1.** Procédé de lecture de données de capteur depuis une mémoire intermédiaire (110), lesquelles sont écrites dans la mémoire intermédiaire (110) depuis un capteur (10) avec un débit de données ($T_{pas}$), une fréquence d'échantillonnage ($T_{sg}$) étant sélectionnée de manière à éviter un débordement de la mémoire intermédiaire (110) et toutes les données de capteur mémorisées temporairement étant chargées dans une mémoire de contrôleur (130) à la fréquence d'échantillonnage ($T_{sg}$) sélectionnée, **caractérisé en ce que** la mémoire intermédiaire (110) génère un message (RBE) si, au moment de l'échantillonnage, aucune nouvelle donnée de capteur n'est présente dans la mémoire intermédiaire (110), le débit de données ($T_{pas}$) du capteur (10) étant calculé à partir du nombre de données de capteur lues pendant une période prédéfinie, de la fréquence d'échantillonnage ($T_{sg}$) prédéfinie et du nombre de messages (RBE) reçus pendant cette période.

**2.** Procédé selon la revendication 1, **caractérisé en ce qu'**au moins un capteur (10) est réalisé sous la forme d'une partie d'un système de détection anticipée et/ou d'un système de détection d'environnement et/ou d'un système de détection de collision latérale et/ou d'un système de détection de contact pour la protection des piétons.

**3.** Procédé selon l'une des revendications 1 à 2, **caractérisé en ce que** la mémoire intermédiaire (110) est réalisée sous la forme d'un ASIC récepteur.

**4.** Procédé selon l'une des revendications 1 à 3, **caractérisé en ce que** l'au moins un capteur (10) dérive son débit de données d'un circuit oscillateur.

**5.** Procédé selon l'une des revendications 1 à 4, **caractérisé en ce que** la mémoire de contrôleur (130) est réalisée sous la forme d'une mémoire circulaire.

Fig. 1

Fig. 2a

$Tpas < Tsg$

Fig. 2b

$Tpas > Tsg$

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10100156 A1

**In der Beschreibung aufgeführte Nicht-Patentliteratur**

- GEMAC. *MVS7 Dokumentation,* 25. Januar 2002, 1-22